# EUROPEAN PATENT APPLICATION

(11) **EP 4 571 156 A1**
(43) Date of publication of application: **18.06.2025**
(21) Application number: 23217038.1
(22) Date of filing: 15.12.2023
(51) Int. Cl.: F16K 1/42, F16K 3/24, F16K 3/36, F16K 11/044

(54) **A VALVE WITH A LUBRICATED SEALING ELEMENT**

(71) Applicant: Danfoss A/S, 6430 Nordborg (DK)
(72) Inventor: ZAGAR, Tomaz, 6430 Nordborg (DK)
(74) Representative: Inspicos P/S

(57) **Abstract**

A valve (1) comprising a valve housing (2) with a first port (4) and a second port (5) is disclosed. The valve housing (2) accommodates a movable valve element (8) for controlling a fluid flow through the valve (1). The valve (1) comprises a sealing element (17) arranged in abutment with the movable valve element (8) so as to provide sealing towards the movable valve element (8) while the movable valve element (8) moves relative to the sealing element (17). The sealing element (17) is mounted in a groove (20), the groove (20) containing a lubricant so as to ensure lubrication of the sealing element (17) during movement of the movable valve element (8).

## Description

### FIELD OF THE INVENTION

The present invention relates to a valve with a valve housing accommodating a movable valve element for controlling a fluid flow through the valve. The valve comprises a sealing element arranged in abutment with the movable valve element so as to provide sealing towards the movable valve element during movement thereof.

### BACKGROUND OF THE INVENTION

Controllable valves normally comprise a movable valve element accommodated in a valve housing in such a manner that movements of the valve element control the fluid flow through the valve. For instance, the position of the movable valve element may determine at least one opening degree of the valve. The movements of the valve element, and thereby the fluid flow through the valve, may be controlled by appropriately controlling an actuator being operably connected to the movable valve element.

The valve element may, e.g., move along at least one opening formed inside the valve, in such a manner that the position of the valve element relative to the opening defines a cross sectional size of the opening being available for fluid flowing therethrough, thus defining an opening degree of the valve with respect to a fluid connection which includes the opening.

In order to prevent internal leaks in the region of the movable valve element, a sealing element may be provided inside the valve housing and arranged in abutment with the movable valve element. Thus, when the valve element moves during operation of the valve, it moves against this sealing element, thus preventing internal leaks between the movable valve element and the sealing element, i.e. between parts of the valve arranged on either side of the sealing element.

Since the valve element moves repeatedly against the sealing element during normal operation of the valve, friction occurs between the valve element and the sealing element during operation of the valve. In order to reduce this friction and ensure reliable operation of the valve, it could be an advantage if a lubricant could be applied between the two parts.

### DESCRIPTION OF THE INVENTION

It is an object of embodiments of the invention to provide a valve with a movable valve element and a sealing element arranged in abutment therewith, where appropriate lubrication is ensured for the sealing element.

The invention provides a valve comprising a valve housing with a first port and a second port, the valve housing accommodating a movable valve element for controlling a fluid flow through the valve, the valve further comprising a sealing element arranged in abutment with the movable valve element so as to provide sealing towards the movable valve element while the movable valve element moves relative to the sealing element,
wherein the sealing element is mounted in a groove, the groove containing a lubricant.

Thus, the valve according to the invention comprises a valve housing with a first port and a second port, the valve thus defining a fluid connection between the first port and the second port. Fluid flowing through the valve may flow in either direction, i.e. from the first port, acting as a fluid inlet, to the second port, acting as a fluid outlet, or from the second port, acting as a fluid inlet, to the first port, acting as a fluid outlet. The direction of the fluid flow through the valve may even be selected, depending on the requirements at a given point in time.

The valve housing accommodates a movable valve element for controlling a fluid flow through the valve. For instance, the valve element may be movable along an opening forming part of the fluid connection between the first port and the second port, e.g. an opening towards the second port. In this case the position of the valve element relative to the opening defines a cross sectional size of the opening being available for fluid flowing therethrough, thus determining a fluid flow in the fluid connection between the first port and the second port.

For instance, the valve element may be movable between a first end position defining a fully open fluid connection between the first port and the second port, and a second end position defining a fully closed fluid connection between the first port and the second port, and intermediate positions of the valve element may define a partly open fluid connection between the first port and the second port.

The valve further comprises a sealing element arranged in abutment with the movable valve element. Thus, when the valve element moves, it moves along and in contact with the sealing element, thus providing sealing between the movable valve element and the sealing element during movement of the valve element. Thus, internal leaks along the movable valve element, between two regions of the valve being separated by the sealing element, are prevented.

The sealing element is mounted in a groove, and the groove contains a lubricant. Thus, the groove has a dual function of holding the sealing element, thus keeping the sealing element in position and in abutment with the movable valve element, and holding a lubricant for lubrication of the sealing element. Accordingly, appropriate lubrication of the sealing element, towards the movable valve element, is ensured, since the lubricant is readily at hand at the exact position where the sealing element is mounted. Furthermore, the dual function of the groove ensures that a separate lubricant reservoir and supply is not required, and therefore the lubrication of the sealing element can be ensured without unduly increasing the size of the valve.

The lubricant may, e.g., be a grease or similar, e.g. with a high viscosity so that it remains in the groove. For instance, the lubricant may be a grease based on silicone oil and polytetrafluoroethylene (PTFE).

The groove may define a plurality lubricant containing pockets being in contact with opposing surface parts of the sealing element. According to this embodiment, the pockets ensure that lubricant is distributed appropriately along the sealing element, thus ensuring that the sealing element is sufficiently and uniformly lubricated. In particular, it is ensured that the surface parts of the sealing element being in contact with the movable valve element are appropriately and sufficiently lubricated.

The groove may further define a plurality of retaining portions for retaining the sealing element in the groove, and the plurality of lubricant containing pockets and the plurality of retaining portions may be arranged alternatingly along the groove. According to this embodiment, the sealing element is retained in the groove, thus keeping it firmly in position relative to the valve element, by the retaining portions, while allowing lubrication of the sealing element via the lubricant containing pockets arranged alternatingly with the retaining portion, i.e. at parts of the sealing element that are not contacted by the retaining portions.

The retaining portions could, e.g., be in the form of a plurality of teeth formed inside the groove, e.g. distributed evenly or uniformly along the sealing element, and the lubricant containing pockets could be the spaces between the teeth. In this case the sealing element may be mounted into the groove in abutment with the teeth and retained there due to friction between the teeth and the sealing element.

As an alternative, the sealing element may be retained in the groove by means of one or more wall parts formed in the groove, e.g. provided with a plurality of openings for allowing lubricant to reach the sealing element.

The valve may further comprise a guiding insert and the valve element may be mounted movably inside the guiding insert, and the groove may be formed in the guiding insert. According to this embodiment, the valve element is guided by the guiding insert when it moves. Furthermore, the guiding insert forms a separate part which is mounted inside the valve housing. This allows the guiding insert, including various features thereof, to be manufactured in an accurate, easy and cost effective manner. Since the groove is formed in the guiding insert, the groove can thus be provided in an accurate, easy and cost effective manner.

The guiding insert may comprise a first guiding insert part and a second guiding insert part, and the groove may be formed at an interface between the first guiding insert part and the second guiding insert part. The first guiding insert part and the second guiding insert part may, e.g., be substantially identical, and may, e.g., be joined to each other in such a manner that they mirror each other. The groove may be formed in a separate part arranged between the first guiding insert part and the second guiding insert part. As alternative, the groove may be formed in either the first guiding insert part or the second guiding insert part. As another alternative, the groove may be formed by two mating portions of the first guiding insert part and the second guiding insert part, respectively.

The guiding insert may be made from a composite material. The composite material could, e.g., be a polymer based material, e.g. polyphenylene sulfide (PPS), polybutylene terephthalate (PBT), glass filled polymer (GF), acrylonitrile butadine styrene (ABS), polycarbonate (PC), or a combination of two of more of these materials. Such composite materials are known to be durable, low cost and lightweight. Accordingly, forming the guiding insert from a composite material results in a valve, where the part of the valve which the movable valve element moves against is durable and lightweight, and can be manufactured at low costs. Furthermore, it is easy to manufacture the guiding insert with a groove having a shape and size which matches various requirements of the valve.

The sealing element may be an O-ring. An O-ring is a suitable kind of sealing element for the purpose of providing sealing against a movable valve element. Furthermore, O-rings are standard parts which are easy and cost effective to manufacture. As an alternative, the sealing element may be of any other suitable kind, such as a quadring, a custom shaped soft seal, e.g. made from rubber, an over-moulded seal, etc.

The valve housing may be made from a composite material, e.g. the composite materials mentioned above with reference to the guiding insert. This would result in valve housing which is durable, lightweight and low cost. Alternatively or additionally, other parts of the valve, such as the valve element, may be made from a composite material. For instance, the valve element may be made from polyphenylsulfone (PPSU). This would, e.g. allow for a valve element with a complex shape to be provided in an easy and cost effective manner.

The valve may be a three-way valve, the valve housing further having a third port, and the first port may be selectively fluidly connectable to the second port and/or the third port inside the valve housing by moving the movable valve element.

According to this embodiment, the valve may establish fluid connections between the first port and each of the second port and the third port. Thus, in the case that the first port forms a fluid inlet of the valve, the second port and the third port each forms a fluid outlet of the valve. In this case, fluid flow received in the valve via the first port may be selectively distributed to the second port and/or the third port. In the case that the first port forms a fluid outlet of the valve, the second port and the third port each forms a fluid inlet of the valve. In this case, fluid received in the valve via the second port and the third port, respectively, may be mixed before being supplied to the first port.

The valve element may, according to this embodiment, be movable along an opening towards the second port as well as along an opening towards the third port. Thus, the position of the valve element determines the fluid flow in the fluid connection between the first port and the second port, as well as the fluid flow in the fluid connection between the first port and the third port, essentially in the manner described above.

Three-way valves may, e.g., be used in heat pumps or other applications where it may be desired to mix fluid flows.

The sealing element may be configured to prevent fluid leaking between the second port and the third port. For instance, the opening towards the second port and the opening towards the third port may be arranged at opposite sides of the sealing element, i.e. the sealing element may be arranged between the opening towards the second port and the opening towards the third port, thus separating a fluid connection comprising the opening towards the second port from a fluid connection comprising the opening towards the third port. Accordingly, the sealing element prevents fluid from flowing from the opening towards the second port directly to the opening towards the third port, or vice versa.

### BRIEF DESCRIPTION OF THE DRAWINGS

The invention will now be described in further detail with reference to the accompanying drawings in which
Figs. 1 and 2 illustrate a valve according to an embodiment of the invention,
Fig. 3 is a cross sectional view of the valve of Figs. 1 and 2,
Figs. 4 and 5 are details of the cross sectional view of the valve of Fig. 3 with a movable valve element in a first end position and a second end position,
Figs. 6-8 are perspective cross sectional views of further details of the valve of Fig. 3, and
Figs. 9a-12b illustrate a guiding insert with a groove for use in a valve according to an embodiment of the invention.

### DETAILED DESCRIPTION OF THE DRAWINGS

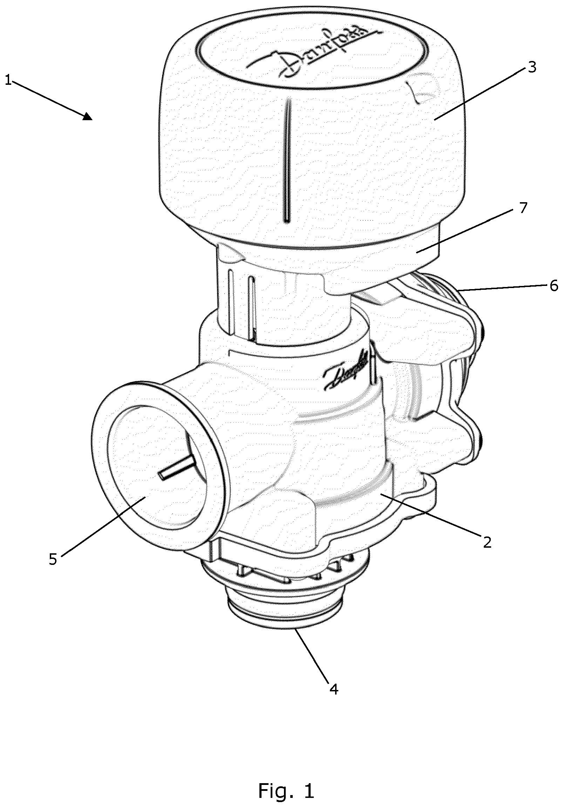

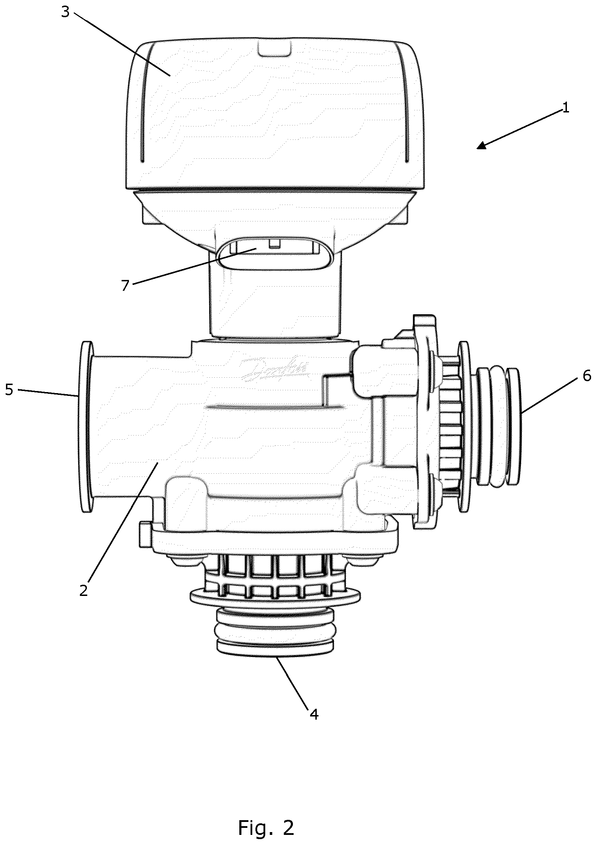

Figs. 1 and 2 illustrate a valve 1 according to an embodiment of the invention. Fig. 1 is a perspective view of the valve 1, and Fig. 2 is a side view of the valve 1.

The valve 1 comprises a valve housing 2 and an actuator housing 3 mounted on the valve housing 2. The valve housing 2 accommodates a movable valve element (not shown) and the actuator housing 3 accommodates an actuator (not shown) being operably connected to the movable valve element. Appropriate operation of the actuator will thus cause movements of the valve element, so as to control a fluid flow through the valve 1.

The valve housing 2 has three ports, in the form of a first port 4, a second port 5 and a third port 6. Fluid connections may be selectively established between the first port 4 and each of the second port 5 and the third port 6. Accordingly, the valve 1 is a three-way valve.

The actuator housing 3 comprises a power connection 7 allowing for power to be supplied to the actuator inside the actuator housing 3, for instance to an electric motor, such as an electric stepper motor, arranged inside the actuator housing 3.

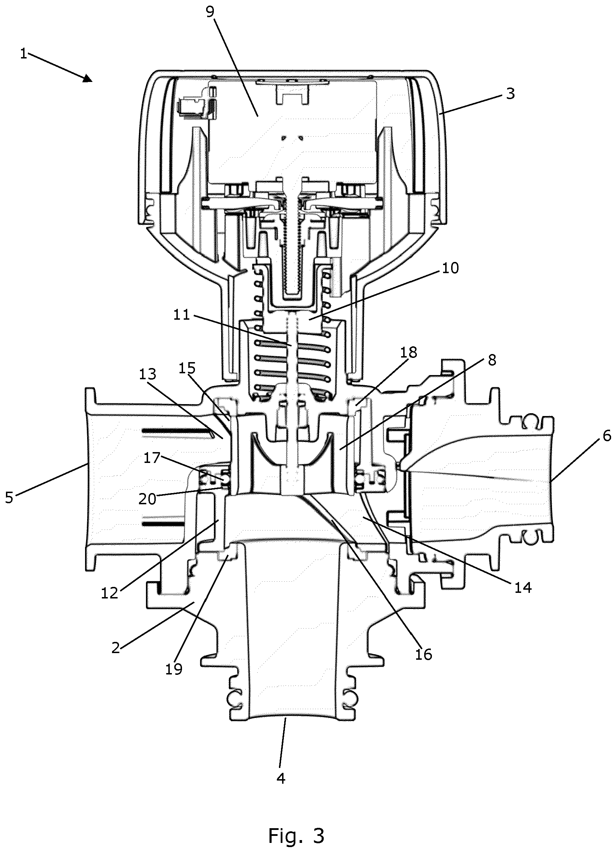

Fig. 3 is a cross sectional view of the valve 1 of Figs. 1 and 2. A valve element 8 is accommodated in the valve housing 2, and is operably connected to an actuator 9 accommodated in the actuator housing 3, via a cup-shaped connecting element 10 and a valve stem 11. Thus, appropriate operation of the actuator 9 causes the valve element 8 to move inside the valve housing 2 towards or away from the actuator housing 3, in the sense that active operation of the actuator 9 causes the valve element 8 to move away from the actuator 9, and lack of active operation of the actuator 9 causes the valve element 8 to be automatically move towards the actuator 9.

The valve element 8 is arranged within a guiding insert 12 in which an opening 13 towards the second port 5 and an opening 14 towards the third port 6 are formed. Thus, the valve element 8 moves along the opening 13 towards the second port 5 as well as along the opening 14 towards the third port 6. Accordingly, the position of the valve element 8 determines the cross sectional size of opening 13 as well as the cross sectional size of opening 14 being available for fluid flow through the respective openings 13, 14, and thereby whether or not and to which extent the fluid connection between the first port 4 and the second port 5 as well as the fluid connection between the first port 4 and the third port 6 is open. This is sometimes referred to as valve characteristic.

The guiding insert 12 comprises a lip 15 arranged along an edge of the opening 13 towards the second port 5, and a lip 16 arranged along an edge of the opening 14 towards the third port 6. The lips 15, 16 abut the valve element 8, thus ensuring that the cross sectional size and shape of fluid passages through each of the openings 13, 14, at a given position of the valve element 8, are well defined. Thereby accurate and reliable control of the fluid flow through the valve 1 is obtained, and the risk of internal leaks is minimised. Furthermore, this is obtained with minimal friction between the movable valve element 8 and other parts of the valve 1, notably the guiding insert 12, since the valve element 8 only abuts the lips 15, 16 and a sealing element 17 which prevents leaking between the second port 5 and the third port 6.

In Fig. 3, the valve element 8 is positioned in a second end position, where it abuts a first valve seat 18. In the second end position, the fluid connection between the first port 4 and the second port 5 is fully closed, and the fluid connection between the first port 4 and the third port 6 is fully open. The valve 1 further comprises a second valve seat 19, which the valve element 8 abuts when it is in a first end position, where the fluid connection between the first port 4 and the second port 5 is fully open and the fluid connection between the first port 4 and the third port 6 is fully closed.

The sealing element 17 is mounted in a groove 20 formed in the guiding insert 12. The groove 20 further holds a supply of lubricant which is applied for lubrication of the sealing element 17. Thus, it is efficiently ensured that the sealing element 17 is appropriately lubricated when the valve element 8 moves while in abutment with the sealing element 17. Furthermore, since the supply of lubricant is held in the groove 20 which also accommodates the sealing element 17, it is not necessary to apply a separate reservoir for the lubricant, and therefore the size of the valve 1, notably the height of the valve 1, can be kept at a minimum.

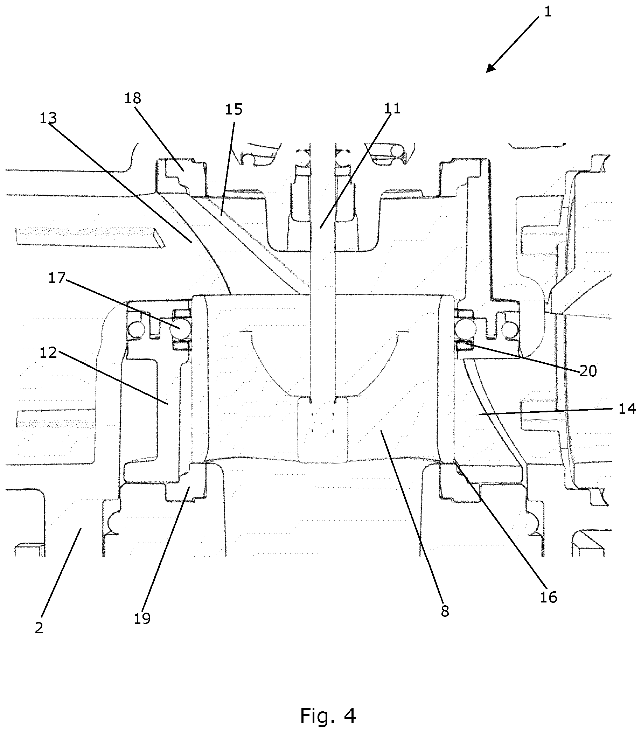

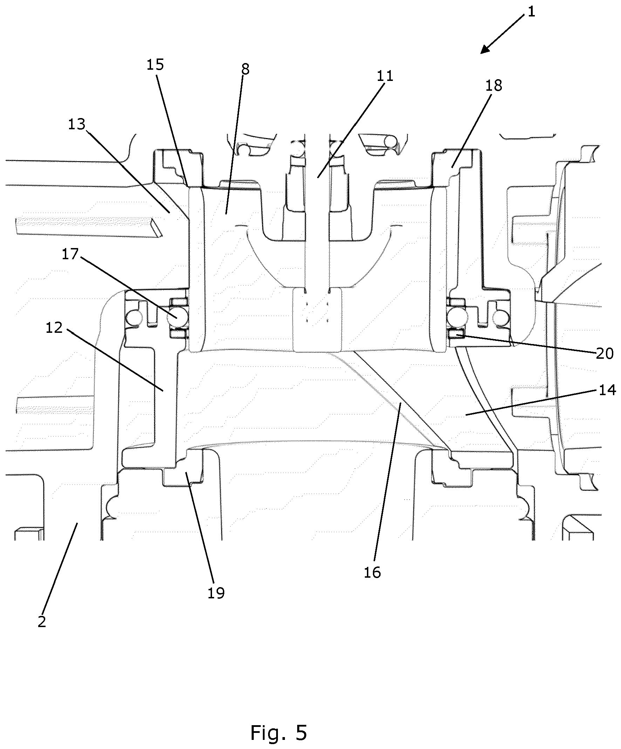

Figs. 4 and 5 are details of the cross sectional view of the valve 1 illustrated in Fig. 3. In Fig. 4 the valve element 8 is positioned in the first end position, abutting the second valve seat 19. In Fig. 5 the valve element 8 is positioned in the second end position, abutting the first valve seat 18, i.e. the position which is also illustrated in Fig. 3.

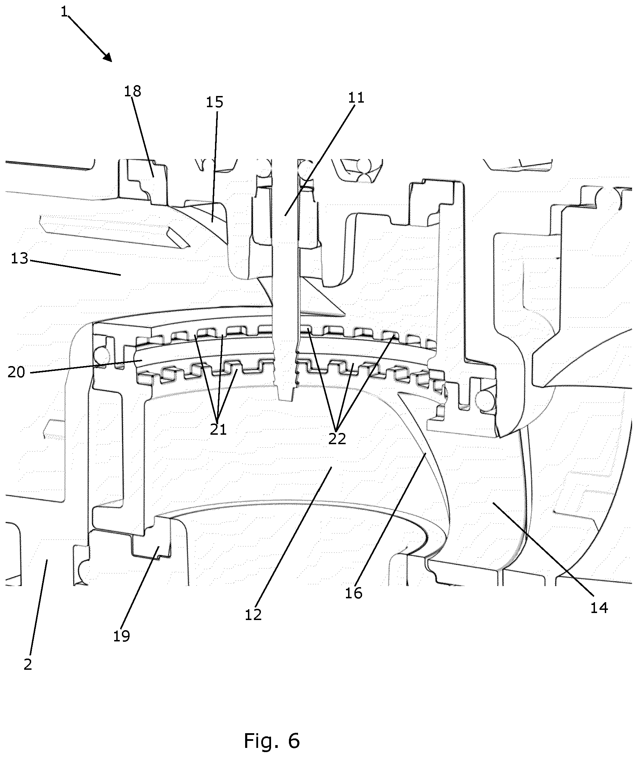

Figs. 6-8 are perspective cross sectional views of further details of the valve 1 of Fig. 3. In Fig. 6 the valve element 8 and the sealing element 17 have been removed in order to reveal details of the groove 20 in which the sealing element 17 is accommodated in Fig. 3.

It can be seen in Fig. 6 that the groove 20 is provided with a plurality of teeth 21 distributed substantially uniformly along the groove 20, and defining spaces 22 between the teeth 21. When a sealing element is to be mounted in the groove 20, it will be mounted between the teeth 21 formed in the upper and the lower part of the groove 20, respectively. This will retain the sealing element, thus ensuring that the sealing element is kept firmly in position. Accordingly, the teeth 21 form retaining portions for retaining the sealing element in the groove 20.

Lubricant accommodated in the groove 20 is brought into contact with the sealing element via the spaces 22 between the teeth 21. Thus, the spaces 22 form lubricant containing pockets being in contact with opposing surfaces of the sealing element. Accordingly, the sealing element is appropriately and uniformly lubricated, along the circumference of the sealing element, and along the surface of the sealing element which faces the inner part of the guiding insert 12 where the valve element 8 will be positioned.

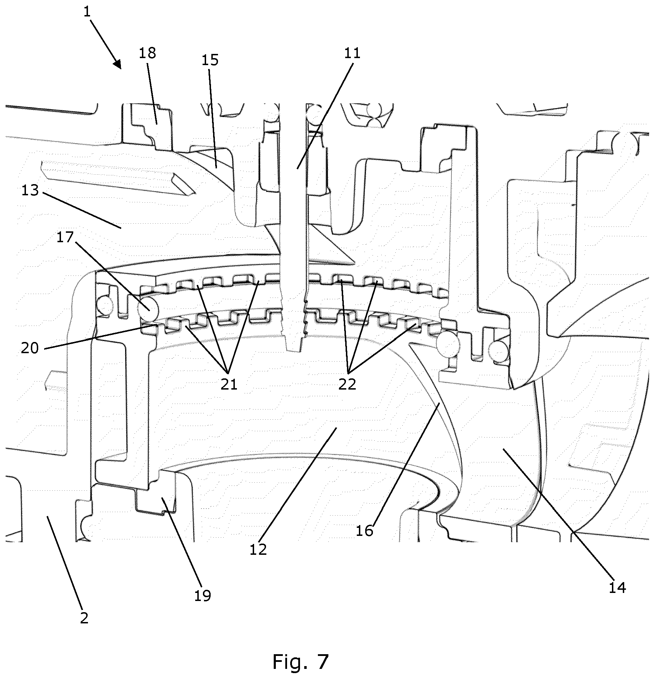

In Fig. 7, the sealing element 17 has been mounted in the groove 20. It can be seen that the sealing element 17 is mounted between the teeth 21 formed in the upper part of the groove 20 and the teeth 21 formed in the lower part of the groove 20, and that the sealing element 17 is therefore retained in the groove 20 by the teeth 21. It can further be seen that the spaces 22 between the teeth 21 form pockets in which lubricant accommodated in the groove 20 can be brought into contact with opposing surface parts of the sealing element 17.

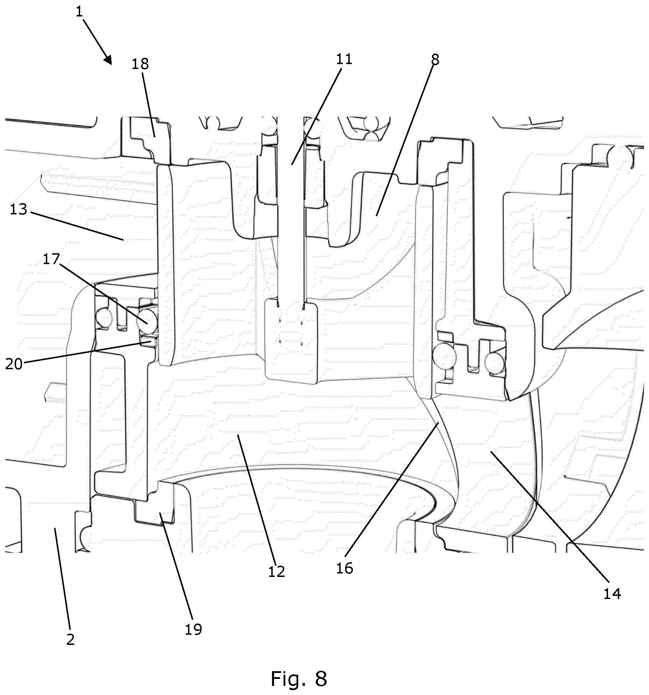

In Fig. 8, the movable valve element 8 has further been mounted in the guiding insert 12. It can be seen that the valve element 8 is arranged in abutment with the sealing element 17.

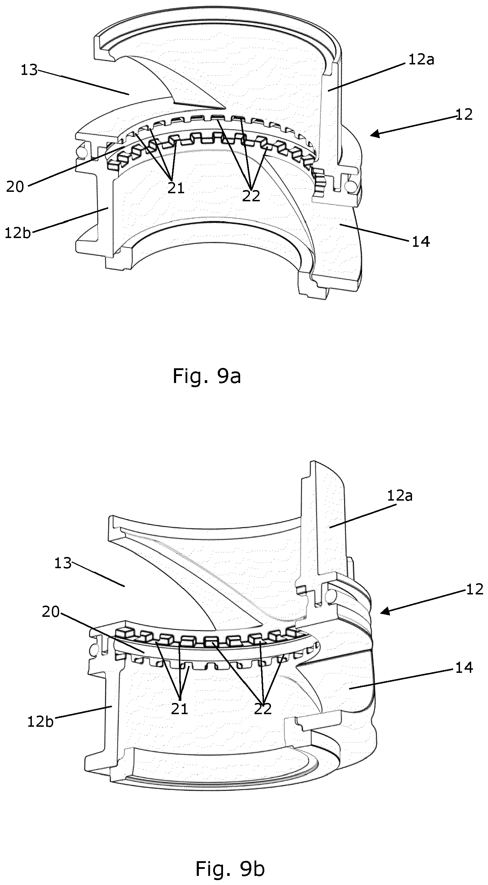

Figs. 9a-12b illustrate a guiding insert 12 with a groove 20 for use in a valve according to an embodiment of the invention. More particularly, Figs. 9a-12b are perspective cross sectional views of the guiding insert 12 with various additional components. The guiding insert 12 is of the kind illustrated in Figs. 3-8, and the remarks set forth above with reference to Figs. 3-8 are therefore equally applicable here.

It can be seen that the guiding insert 12 comprises a first guiding insert part 12a in which the opening 13 towards the second port is formed, and a second guiding insert part 12b, in which the opening 14 towards the third port is formed. The first guiding insert part 12a and the second guiding insert part 12b are joined to each other, and at the interface between the first guiding insert part 12a and the second guiding insert part 12b, the groove 20 for receiving the sealing element 17 is formed. It should be noted that the guiding insert 12 could, alternatively, be formed as a single part.

Figs. 9a and 9b show the guiding insert 12 from two different angles, without the sealing element mounted in the groove 20, similar to the situation illustrated in Fig. 6. Thus, the teeth 21 and the spaces 22 between the teeth 21 can be readily seen.

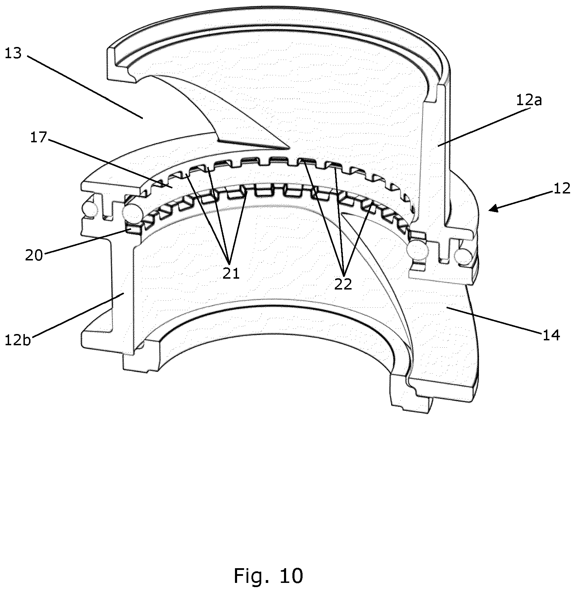

In Fig. 10, the sealing element 17 has been mounted in the groove 20, and is retained by the teeth 21 formed in the part of the groove 20 formed by the first guiding insert part 12a and the teeth 21 formed in the part of the groove 20 formed by the second guiding insert part 12b, respectively. In can further be seen that the spaces 22 between the teeth 21 form pockets in which lubricant accommodated in the groove 20 can be brought into contact with opposing surface parts of the sealing element 17. This is similar to the situation illustrated in Fig. 7.

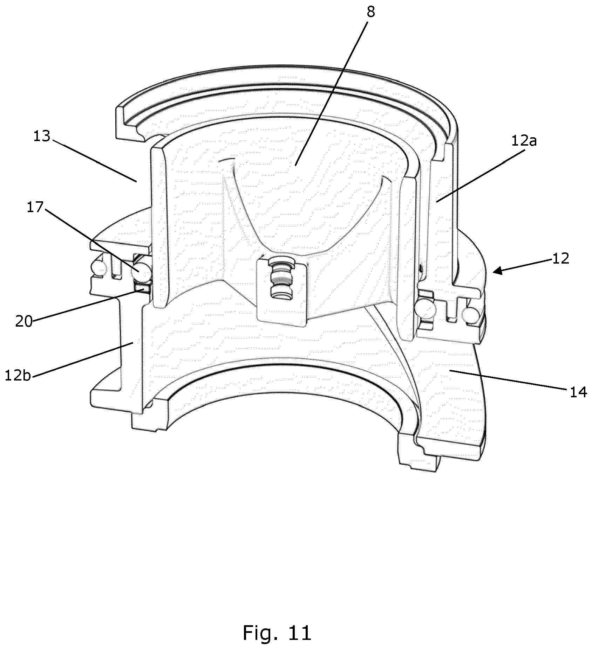

In Fig. 11, the movable valve element 8 has further been mounted inside the guiding insert 12 in abutment with the sealing element 17. This is similar to the situation illustrated in Fig. 8.

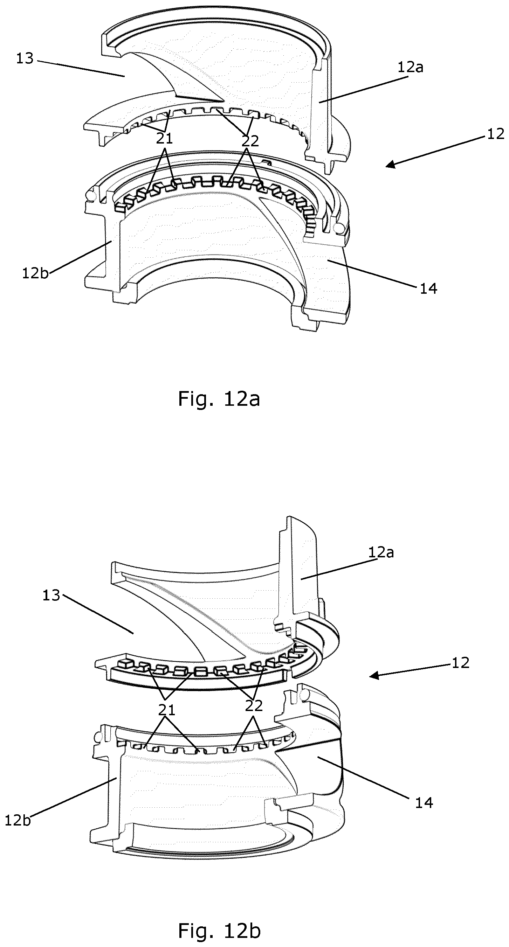

Figs. 12a and 12b are exploded views of the guiding insert 12 from two different angles. Accordingly, in Figs. 12a and 12b, the first guiding insert part 12a and the second guiding insert part 12b can be seen separately, and it can be clearly seen that the groove will be formed by mating parts of the first guiding insert part 12a and the second guiding insert part 12b, respectively, once the first guiding insert part 12a and the second guiding insert part 12b are joined to each other so as to form the guiding insert part 12.

## Claims

1. A valve (1) comprising a valve housing (2) with a first port (4) and a second port (5), the valve housing (2) accommodating a movable valve element (8) for controlling a fluid flow through the valve (1), the valve (1) further comprising a sealing element (17) arranged in abutment with the movable valve element (8) so as to provide sealing towards the movable valve element (8) while the movable valve element (8) moves relative to the sealing element (17),
wherein the sealing element (17) is mounted in a groove (20), the groove (20) containing a lubricant.

2. A valve (1) according to claim 1, wherein the groove (20) defines a plurality lubricant containing pockets (22) being in contact with opposing surface parts of the sealing element (17).

3. A valve (1) according to claim 2, wherein the groove (20) further defines a plurality of retaining portions (21) for retaining the sealing element (17) in the groove (20), and wherein the plurality of lubricant containing pockets (22) and the plurality of retaining portions (21) are arranged alternatingly along the groove (20).

4. A valve (1) according to any of the preceding claims, wherein the valve (1) further comprises a guiding insert (12) and the valve element (8) is mounted movably inside the guiding insert (12), and wherein the groove (20) is formed in the guiding insert (12).

5. A valve (1) according to claim 4, wherein the guiding insert (12) comprises a first guiding insert part (12a) and a second guiding insert part (12b), and wherein the groove (20) is formed at an interface between the first guiding insert part (12a) and the second guiding insert part (12b).

6. A valve (1) according to claim 4 or 5, wherein the guiding insert (12) is made from a composite material.

7. A valve (1) according to any of the preceding claims, wherein the sealing element (17) is an O-ring.

8. A valve (1) according to any of the preceding claims, wherein the valve housing (2) is made from a composite material.

9. A valve (1) according to any of the preceding claims, wherein the valve (1) is a three-way valve, the valve housing (2) further having a third port (6), where the first port (4) is selectively fluidly connectable to the second port (5) and/or the third port (6) inside the valve housing (2) by moving the movable valve element (8).

10. A valve (1) according to claim 9, wherein the sealing element (17) is configured to prevent fluid leaking between the second port (5) and the third port (6).
